# EUROPEAN PATENT APPLICATION

(11) **EP 4 789 842 A1**
(43) Date of publication of application: **12.08.2026**
(21) Application number: 25864547.2
(22) Date of filing: 09.07.2025
(51) Int. Cl.: B29C 51/08, B29C 51/26, B29C 51/30, B29C 43/36, B29D 99/00, H01M 50/105, B29C 43/32

(54) **MOLDING DEVICE AND MOLDING METHOD**

(30) Priority: 12.11.2024 KR 20240160359
(71) Applicant: LG ENERGY SOLUTION, LTD., Seoul 07335 (KR)
(72) Inventor: KIM, Wan Ju, Yuseong-gu Daejeon 34122 (KR); SHIN, Hyun Seung, Yuseong-gu Daejeon 34122 (KR); KOO, Sang Hyun, Yuseong-gu Daejeon 34122 (KR)
(74) Representative: Plasseraud IP
(86) International application number: PCT/KR2025/009983
(87) International publication number: WO 2026/106017

(57) **Abstract**

A forming apparatus according to an embodiment of the present disclosure may form an accommodation portion in a pouch film. The forming apparatus may include a die having a forming space and an additional space recessed from an upper surface of the die, the additional space located outside of the forming space and separated from the forming space; a stripper disposed upside of the die and configured to hold the pouch film; a punch configured to apply pressure to a target area of the pouch film to stretch it into the forming space; and a pressure applying unit in communication with the additional space and configured to apply pneumatic pressure to a peripheral area located around the target area of the pouch film through the additional space.

## Description

### TECHNICAL FIELD

### CROSS-REFERENCE TO RELATED APPLICATIONS

This application is based on and claims priority from Korean Patent Application No. 10-2024-0160359 filed on November 12, 2024 with the Korean Intellectual Property Office, the disclosure of which is incorporated herein in its entirety by reference.

### TECHNICAL FIELD

The present disclosure relates to a forming apparatus and a forming method for forming an accommodation portion in a pouch film to manufacture a pouch-shaped battery case.

### BACKGROUND

In general, the types of secondary batteries include nickel cadmium batteries, nickel hydrogen batteries, lithium-ion batteries and lithium-ion polymer batteries. Secondary batteries are used in not only small products such as digital cameras, P-DVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

To manufacture secondary batteries, first, an electrode active material slurry is applied to a positive current collector and a negative current collector to manufacture a positive electrode and a negative electrode, and the positive electrode and the negative electrode are stacked on two sides of a separator to form an electrode assembly of a predetermined shape. Additionally, the electrode assembly is housed in a battery case, followed by electrolyte injection and sealing.

Secondary batteries are classified into a pouch type and a can type according to the material of the case accommodating the electrode assembly. The pouch type accommodates the electrode assembly in the pouch made of a flexible polymer material. Additionally, the can type accommodates the electrode assembly in the case made of a metal or plastic material.

The pouch-shaped battery case is generally manufactured by performing press working on a flexible pouch film to form an accommodation portion having a recessed shape. Additionally, when the accommodation portion is formed, the electrode assembly is housed in the accommodation portion, following by side sealing to manufacture a secondary battery.

In the press working, drawing is performed by inserting the pouch film into a forming apparatus such as a press machine and applying pressure to the pouch film using a punch to stretch the pouch film.

The commonly used forming apparatus includes a die on which the pouch film is placed and which has a forming space, a stripper disposed upside of the die and configured to hold the pouch film, and the punch configured to stretch the pouch film. When the die and the stripper move up with respect to the punch or the punch moves down with respect to the die and the stripper, the punch applies pressure to the pouch film to stretch a part of the pouch film into the forming space of the die, thereby forming the accommodation portion in the pouch film.

However, when the punch applies pressure to the pouch film, stress concentration occurs at the corner of the punch, and as a consequence, the corner of the accommodation portion is stretched too much and the residual thickness is reduced, causing cracks or pin holes.

### DISCLOSURE

### TECHNICAL PROBLEM

The present disclosure is directed to providing a forming apparatus and a forming method for forming an accommodation portion with a large depth while preventing concentrated stretching at the corner of the accommodation portion.

### TECHNICAL SOLUTION

A forming apparatus according to an embodiment of the present disclosure may form an accommodation portion in a pouch film. The forming apparatus may include a die having a forming space and an additional space recessed from an upper surface of the die, the additional space located outside of the forming space and separated from the forming space; a stripper disposed upside of the die and configured to hold the pouch film; a punch configured to apply pressure to a target area of the pouch film to stretch it into the forming space; and a pressure applying unit in communication with the additional space and configured to apply pneumatic pressure to a peripheral area located around the target area of the pouch film through the additional space.

The die may have a partition wall to define the forming space and the additional space.

An upper end of the partition wall may be at a same height as the upper surface of the die.

A die edge connecting an upper end and an inner circumference of the partition wall may be rounded.

The punch may include a base portion in contact with or adjacent to an inner circumference of the stripper; and a protruding portion protruded downward from the base portion and configured to apply pressure to the target area of the pouch film while the protruding portion is inserted into the forming space. An auxiliary space may be formed between the inner circumference of the stripper and an outer circumference of the protruding portion, and the pressure applying unit may apply the pneumatic pressure to the peripheral area of the pouch film to stretch it into the auxiliary space.

A punch edge connecting a lower surface and the outer circumference of the protruding portion may be rounded.

The pressure applying unit may apply the pneumatic pressure to the peripheral area of the pouch film to stretch it into the auxiliary space.

The base portion may be adjacent to an upper end of the partition wall when the protruding portion is fully inserted into the forming space.

The punch may move from a first height at which the protruding portion is adjacent to an upper end of the partition wall to a second height at which the base portion is adjacent to the upper end of the partition wall.

The pressure applying unit may apply the pneumatic pressure to the peripheral area of the pouch film during the movement of the punch from the first height to the second height.

The die may have a passage communicating the pressure applying unit with the additional space.

The passage may run from a lower surface or an outer circumferential surface of the die to the additional space.

A forming method according to an embodiment of the present disclosure may form an accommodation portion in a pouch film. The forming method may include the steps of holding the pouch film between a die and a stripper; placing a punch such that the punch faces a forming space of the die with the pouch film positioned therebetween; applying, by a pressure applying unit, pneumatic pressure to the pouch film to stretch a peripheral area of the pouch film into an auxiliary space defined between the stripper and the punch; an applying, by the punch, pressure to the pouch film while the punch is inserted into the forming space, to stretch a target area of the pouch film into the forming space, the target area located at an inner position than the peripheral area.

In the step of applying the pressure to the pouch film, the pressure applying unit may maintain the pneumatic pressure applied to the pouch film.

In the step of applying the pneumatic pressure to the pouch film, the pressure applying unit may apply the pneumatic pressure through an additional space separated from the forming space of the die by a partition wall.

In the step of placing the punch, the punch may be located at a height close to an upper end of the partition wall.

The punch may include a base portion in contact with or adjacent to an inner circumference of the stripper; and a protruding portion protruded downward from the base portion and inserted into the forming space. In the step of applying the pressure to the pouch film, the punch may move from a first height at which the protruding portion is adjacent to an upper end of the partition wall to a second height at which the base portion is adjacent to the upper end of the partition wall.

### ADVANTAGEOUS EFFECTS

According to an exemplary embodiment of the present disclosure, the pressure applying unit may pre-stretch the peripheral area of the pouch film by pneumatic pressure. Accordingly, when the punch applies pressure to the target area of the pouch film while it is inserted into the forming space, a part of the stretched peripheral area may enter the forming space of the die together. Thus, it may be possible to prevent the target area from being stretched too much, and minimize stress concentration at a part of the target area. Accordingly, it may be possible to form with a large residual thickness of the corner of the accommodation portion, and reduce pinhole or crack risks.

In addition, as it is possible to form with a large residual thickness of the corner, the accommodation portion be formed with a larger depth.

Besides, the effects of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.
FIG. 1 is a schematic diagram of a forming apparatus according to an embodiment of the present disclosure.
FIGS. 2 to 4 are diagrams illustrating the operation of the forming apparatus shown in FIG. 1.
FIG. 5 is a flowchart of a forming method according to an embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be exaggerated to some extent for convenience of understanding.

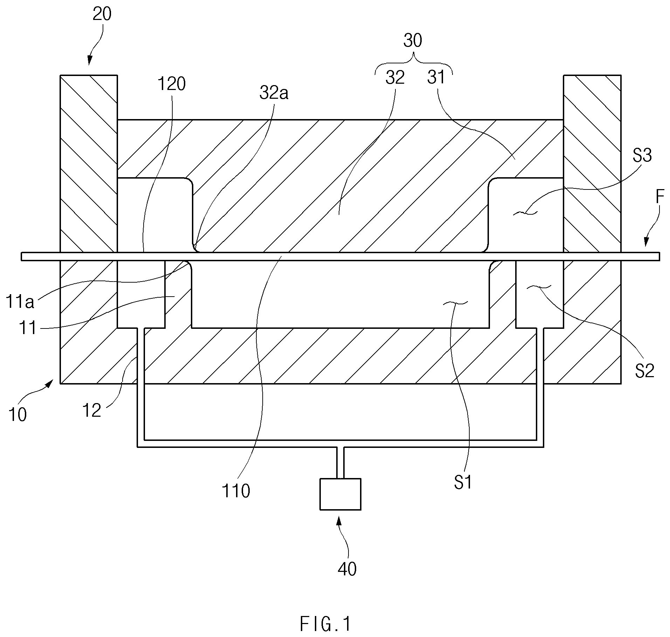

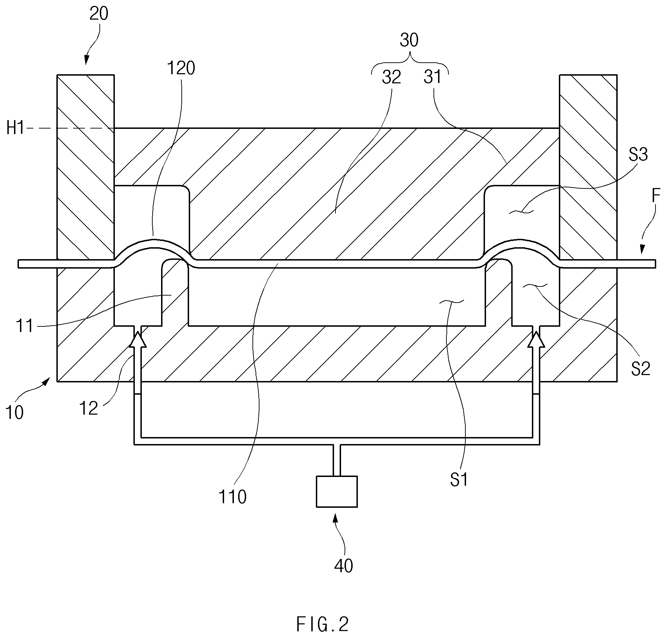

FIG. 1 is a schematic diagram of a forming apparatus according to an embodiment of the present disclosure, and FIGS. 2 to 4 are diagrams illustrating the operation of the forming apparatus shown in FIG. 1.

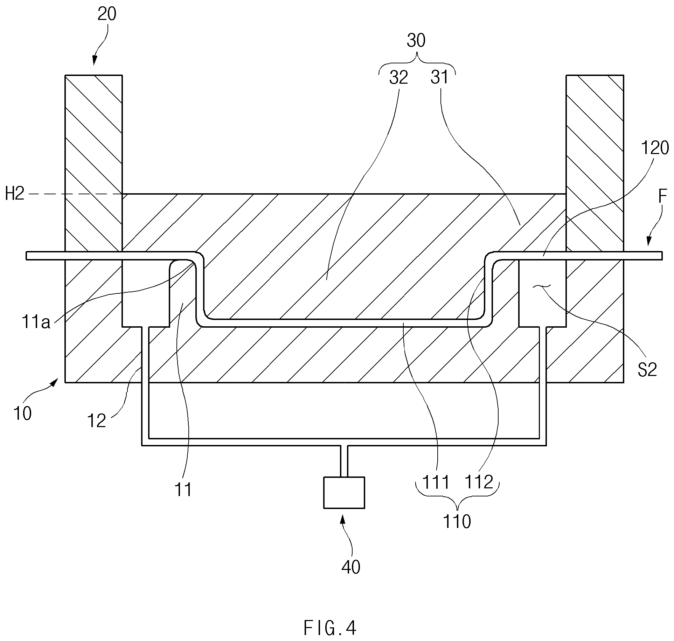

The forming apparatus according to an embodiment of the present disclosure may form an accommodation portion 110 (see FIG. 4) in a pouch film F. The pouch film F may have a predetermined thickness. The pouch film F may be a laminate sheet in which a pair of resin layers located at two outermost sides and a metal layer located between the pair of resin layers are laminated together. The forming apparatus may form the accommodation portion 110 having a recessed shape in the pouch film F.

More specifically, the forming apparatus may include a die 10, a stripper 20, a punch 30 and a pressure applying unit 40.

The pouch film F may be placed on the upper surface of the die 10.

The die 10 may have a forming space S1 and an additional space S2.

The forming space S1 may be recessed from the upper surface of the die 10. At least a part of the forming space S1 may be open to bottom, but is not limited thereto. The forming space S1 may be a space where the pouch film F is stretched and formed by the punch 30 as described below.

The additional space S2 may be recessed from the upper surface of the die 10. The additional space S2 may be a space for the pressure applying unit 40 as described below to apply pneumatic pressure to the pouch film F.

The additional space S2 may be located outside of the forming space S1. The additional space S2 may have a shape that surrounds the forming space S1. For example, when the die 10 is viewed from above, the forming space S1 may have an approximately square or rectangular shape, and the additional space S2 may have an approximately square or rectangular closed loop shape. However, the present disclosure is not limited thereto.

The additional space S2 and the forming space S1 may be defined. More specifically, the die 10 may have a partition wall 11 to define the forming space S1 and the additional space S2.

The upper end of the partition wall 11 may be at the same height as the upper surface of the die 10. Accordingly, the pouch film F placed on the upper surface of the die 10 may be supported by the upper end of the partition wall 11. When the pouch film F is placed on the upper surface of the die 10, the pouch film F may cover the upper side of the forming space S1 and the additional space S2.

A die edge 11a connecting the upper end and the inner circumference of the partition wall 11 may be rounded. The inner circumference of the partition wall 11 may refer to the inner circumference of the forming space S1. In the process of forming the accommodation portion 110 in the pouch film F, the pouch film F may be pressed by the die edge 11a to form an upper edge. The upper edge may be an edge connecting a circumferential surface 112 of the accommodation portion 110 and a terrace portion 120. The terrace portion 120 may be a part of the pouch film F located at an outer position than the inner circumference of the partition wall 11. Because the die edge 11a is rounded, it may be possible to prevent cracks at the upper edge formed in the accommodation portion 110.

The stripper 20 may be disposed upside of the die 10 and hold the pouch film F. The stripper 20 may face the die 10 with the pouch film F positioned therebetween. The stripper 20 may be configured to move up and down with respect to the die 10. For example, after the stripper 20 has moved up, the pouch film F may be inserted between the die 10 and the stripper 20, and subsequently, when the stripper 20 moves down, the pouch film F may be held between the die 10 and the stripper 20. More specifically, the pouch film F may be held between the upper surface of the die 10 and the lower surface of the stripper 20.

The stripper 20 may surround the punch 30. More specifically, the inner circumference of the stripper 20 and the outer circumference of the punch 30 may face each other.

When the stripper 20 holds the pouch film F, the pouch film F may be located below the punch 30.

When the pouch film F is held between the die 10 and the stripper 20, a part of the pouch film F may be located between the forming space S1 and the punch 30. The part of the pouch film F corresponding to the forming space S1 may be referred to as a target area. The target area of the pouch film F may be stretched into the forming space S1 by the punch 30. That is, the target area may be formed as the accommodation portion 110. For convenience of description, the target area is indicated by the reference number '110' which is same as the accommodation portion 110.

In addition, a part of the pouch film F corresponding to the partition wall 11 and the additional space S2 may be referred to as a peripheral area. The peripheral area of the pouch film F may be stretched into an additional space S3 as described below by the pneumatic pressure applied by the pressure applying unit 40. At least a part of the peripheral area may form the terrace portion 120. For convenience, the peripheral area is indicated by the reference number '120' which is same as the terrace portion 120. However, the inner side part of the peripheral area 120 may form a part of the circumferential surface 112 of the finally formed accommodation portion 110.

The peripheral area 120 may be located around the target area 110. In other words, the target area 110 may be located at an inner position than the peripheral area 120.

The target area 110 of the pouch film F may cover the forming space S1 and be located below a protruding portion 32 of the punch 30. The peripheral area 120 of the pouch film F may cover the partition wall 11 and the additional space S2 and be located below a base portion 31 of the punch 30.

The punch 30 may apply pressure to the target area 110 of the pouch film F to stretch it into the forming space S1 of the die 10. The punch 30 may be inserted into the forming space S1 from above the die 10. More specifically, when the punch 30 moves down with respect to the die 10 and the stripper 20, the punch 30 applies pressure to the pouch film F to stretch the target area 110 into the forming space S1 of the die 10, thereby forming the accommodation portion 110 in the pouch film F.

The downward movement of the punch 30 with respect to the die 10 and the stripper 20 may include the upward movement of the die 10 and the stripper 20 with respect to the punch 30.

The punch 30 may include the base portion 31 and the protruding portion 32.

The base portion 31 may be in contact with or adjacent to the inner circumference of the stripper 20. More specifically, the outer circumference of the base portion 31 may be in contact with or adjacent to the inner circumference of the stripper 20. Accordingly, the stripper 20 may guide the movement of the punch 30.

The protruding portion 32 may protrude downward from the base portion 31 and be inserted into the forming space S1 of the die 10. That is, the protruding portion 32 may apply pressure to the target area 110 of the pouch film F. That is, the protruding portion 32 may stretch the target area 110 into the forming space S1 of the die 10, thereby forming the accommodation portion 110 in the pouch film F.

A punch edge 32a connecting the outer circumference and the lower surface of the protruding portion 32 may be rounded. The punch edge 32a may apply pressure to the pouch film F to form a lower edge and a corner of the accommodation portion 110. Because the punch edge 32a is rounded, it may be possible to prevent cracks at the lower edge and the corner of the accommodation portion 110. The lower edge may be an edge connecting a bottom surface 111 and the circumference surface 112 of the accommodation portion 110, and the corner may be where a pair of circumference surfaces 112 and the bottom surface 111 of the accommodation portion 110 meet.

An auxiliary space S3 may be formed between the inner circumference of the stripper 20 and the outer circumference of the protruding portion 32. The lower surface of the base portion 31 may define the inner upper surface of the auxiliary space S3. The auxiliary space S3 may be a space where the peripheral area 120 of the pouch film F is stretched by the pneumatic pressure of the pressure applying unit 40. The auxiliary space S3 may face the partition wall 11 and the additional space S2 with the peripheral area 120 of the pouch film F positioned therebetween.

The pressure applying unit 40 may be in communication with the additional space S2 of the die 10. The pressure applying unit 40 may apply the pneumatic pressure to the peripheral area 120 of the pouch film F through the additional space S2. More specifically, the pressure applying unit 40 may apply the pneumatic pressure to the peripheral area 120 of the pouch film F to stretch it into the auxiliary space S3.

The configuration of the pressure applying unit 40 is not limited thereto. For example, the pressure applying unit 40 may include a pneumatic pump. In addition, the type of gas injected by the pressure applying unit 40 is not limited to a particular one. For example, the pressure applying unit 40 may inject air.

The die 10 may have a passage 12 communicating the pressure applying unit 40 with the additional space S1. The passage 12 may run from the lower surface or the outer circumferential surface of the die 10 to the additional space S2.

The pressure applying unit 40 may apply the pneumatic pressure to the peripheral area 120 of the pouch film F by injecting gas into the additional space S2 through the passage 12. Accordingly, the peripheral area 120 may be stretched into the additional space S3.

Referring to FIG. 2, the pressure applying unit 40 may apply the pneumatic pressure to the peripheral area 120 of the pouch film F before the punch 30 applies pressure to the target area 110 of the pouch film F. Accordingly, the peripheral area 120 may be pre-stretched in the opposite direction (i.e., upward direction) to the direction in which the forming space S1 is recessed.

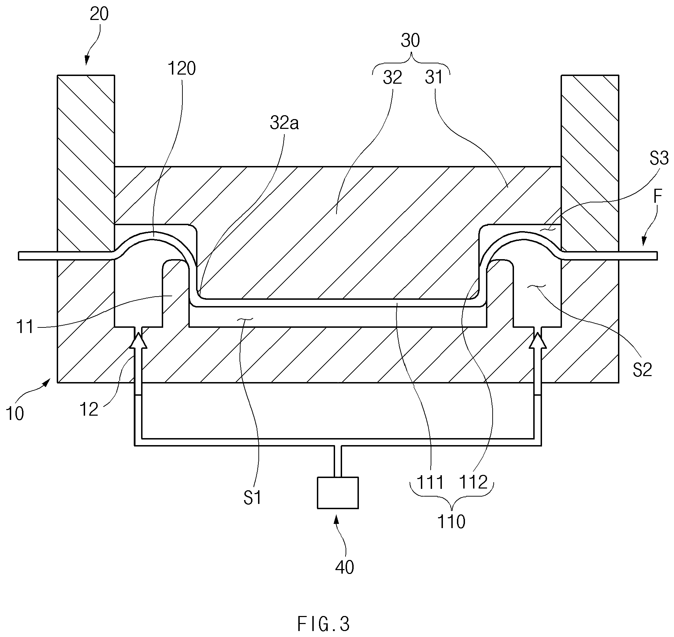

Subsequently, as shown in FIG. 3, the protruding portion 32 of the punch 30 may apply pressure to the pouch film F while it is inserted into the forming space S1. In this instance, a part of the peripheral area 120 of the pouch film F that has been pre-stretched may enter the forming space S1. Accordingly, it is possible to prevent the target area 110 from being stretched too much, and minimize stress concentration at a part of the target area 110, particularly a part of the target area 110 pressed by the punch edge 32a.

More specifically, the punch 30 may move from a first height H1 at which the protruding portion 32 is adjacent to the upper end of the partition wall 11 to a second height H2 at which the base portion 31 is adjacent to the upper end of the partition wall 11. Here, being adjacent may refer to coming into contact with the pouch film F positioned therebetween.

As shown in FIG. 2, the pressure applying unit 40 may apply the pneumatic pressure to the peripheral area 120 of the pouch film F when the punch 30 is at the first height H1. In this instance, because the protruding portion 32 and the partition wall 11 are adjacent to each other, the gas injected into the additional space S2 by the pressure applying unit 40 may not flow to the forming space S1. Accordingly, the pneumatic pressure may be smoothly applied to the peripheral area 120 of the pouch film F.

As shown in FIG. 3, the pressure applying unit 40 may apply the pneumatic pressure to the peripheral area 120 of the pouch film F while the punch 30 applies pressure to the target area 110 of the pouch film F. More specifically, the pressure applying unit 40 may apply the pneumatic pressure to the peripheral area 120 of the pouch film F during the movement of the punch 30 from the first height H1 to the second height H2. Accordingly, it may be possible to keep the peripheral area 120 tight, thereby preventing wrinkles in the peripheral area 120.

As shown in FIG. 4, when the punch 30 reaches the second height H1, the base portion 31 may be adjacent to the upper end of the partition wall 11, which may limit the movement of the punch 30. That is, when the protruding portion 32 is fully inserted into the forming space S1, the base portion 31 may be adjacent to the upper end of the partition wall 11. Accordingly, the forming of the accommodation portion 110 may be completed. Here, the bottom surface 111 of the accommodation portion 110 may be a part that contacts the bottom surface of the protruding portion 32, and the circumferential surface 112 of the accommodation portion 110 may be a part located between the outer circumference of the protruding portion 32 and the inner circumference of the partition wall 11.

Although not shown in the drawings, the forming apparatus may include a plurality of actuators to move at least one of the die 10, the stripper 20 or the punch 30 up and down. For example, the actuator may include a cylinder.

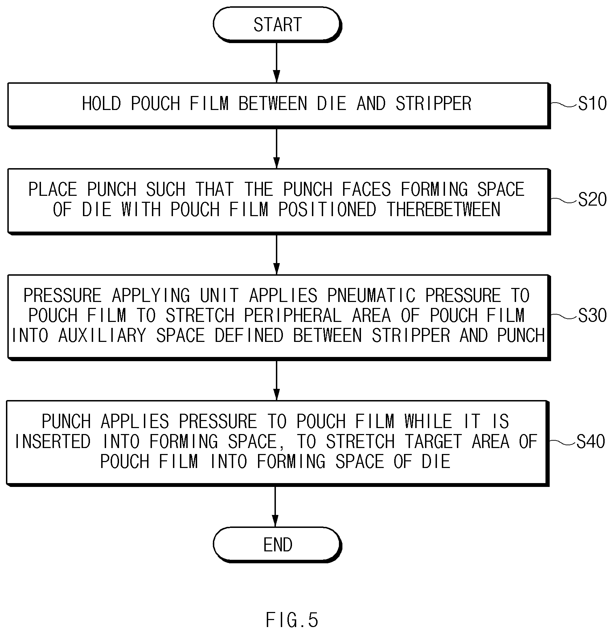

FIG. 5 is a flowchart of a forming method according to an embodiment of the present disclosure.

Hereinafter, the forming method performed by the above-described forming apparatus will be described as another embodiment of the present disclosure. Accordingly, with regard to the forming method, reference may be made to the above description.

The forming method according to another embodiment of the present disclosure may include the step S10 (hereinafter, 'holding step') of holding the pouch film F1 between the die 10 and the stripper 20, the step S20 (hereinafter, 'placement step') of placing the punch 30 such that the punch 30 faces the forming space S1 of the die 10 with the pouch film F positioned therebetween, the step S30 (hereinafter, 'first pressure applying step') of applying, by the pressure applying unit 40, pneumatic pressure to the pouch film F to stretch the peripheral area 120 of the pouch film F into the auxiliary space S3 defined between the stripper 20 and the punch 30, and the step S40 (hereinafter, 'second pressure applying step') of applying, by the punch 30, pressure to the pouch film F while it is inserted into the forming space S1, to stretch the target area 110 of the pouch film F into the forming space S1.

In the holding step S10, when there is a predetermined gap between the die 10 and the stripper 20, the pouch film F may be inserted between the die 10 and the stripper 20. Subsequently, as the gap is reduced, the pouch film F may be held between the die 10 and the stripper 20.

Although FIG. 5 shows that the placement step S20 is performed after the holding step S10, the holding step S10 and the placement step S20 may be performed at the same time.

In the placement step S20, the protruding portion 32 of the punch 30 may face the forming space S1 of the die 10 with the pouch film F positioned therebetween. In addition, the base portion 31 of the punch 30 may face the partition wall 11 and the additional space S2 of the die 10 with the pouch film F positioned therebetween.

In the placement step S20, the punch 30 may be located at the first height H1. That is, the protruding portion 32 of the punch 30 may be adjacent to the upper end of the partition wall 11. Accordingly, in the subsequent first pressure applying step S30, gas injected into the additional space S2 by the pressure applying unit 40 does not flow into the forming space S1 and the pneumatic pressure may be smoothly applied to the peripheral area 120 of the pouch film F.

In the first pressure applying step S30, the pressure applying unit 40 may apply the pneumatic pressure through the additional space S2 of the die 10. More specifically, the pressure applying unit 40 may inject gas (for example, air) into the additional space S2 through the passage 12 of the die 10. Accordingly, the pneumatic pressure may be applied to the peripheral area 120 of the pouch film F, and the peripheral area 120 may be stretched into the auxiliary space S3.

The second pressure applying step S40 may be performed after the first pressure applying step S30.

In the second pressure applying step S40, the protruding portion 32 of the punch 30 may apply pressure the target area 110 of the pouch film F while it is inserted into the forming space S1. More specifically, the punch 30 may move from the first height H1 at which the protruding portion 32 is adjacent to the upper end of the partition wall 11 to the second height H2 at which the base portion 31 is adjacent to the upper end of the partition wall 11. In this instance, the inner side part of the peripheral area 120 that has been pre-stretched may enter the forming space S1. Accordingly, it may be possible to form with a large residual thickness of the corner of the accommodation portion 110 while preventing the target area 110 from being stretched too much.

In the second pressure applying step S40, the pressure applying unit 40 may maintain the pneumatic pressure applied to the pouch film F. Accordingly, it may be possible to keep the peripheral area 120 of the pouch film F tight, thereby preventing wrinkles in the terrace portion 120 of the battery case.

While the foregoing is provided to describe the technical aspects of the present disclosure by way of illustration, persons having ordinary skill in the technical field pertaining to the present disclosure will appreciate that a variety of changes and modifications may be made thereto without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be understood that the scope of protection of the present disclosure encompasses all the technical aspects within the equivalent scope.

### [List of Reference Numerals]

| | | | |
|---|---|---|---|
| 10: | Die | 11: | Partition wall |
| 11a: | Die edge | 12: | Passage |
| 20: | Stripper | 30: | Punch |
| 31: | Base portion | 32: | Protruding portion |
| 32a: | Punch edge | 40: | Pressure applying unit |
| 110: | Target area, Accommodation portion | 120: | Peripheral area: Terrace portion |
| F: | Pouch film | S1: | Forming space |
| S2: | Additional space | S3: | Auxiliary space |

## Claims

1. A forming apparatus for forming an accommodation portion in a pouch film, the forming apparatus comprising:
a die having a forming space and an additional space recessed from an upper surface of the die, the additional space located outside of the forming space and separated from the forming space;
a stripper disposed upside of the die and configured to hold the pouch film;
a punch configured to apply pressure to a target area of the pouch film to stretch it into the forming space; and
a pressure applying unit in communication with the additional space and configured to apply pneumatic pressure to a peripheral area located around the target area of the pouch film through the additional space.

2. The forming apparatus according to claim 1,
wherein the die has a partition wall to define the forming space and the additional space.

3. The forming apparatus according to claim 2,
wherein an upper end of the partition wall is at a same height as the upper surface of the die.

4. The forming apparatus according to claim 2,
wherein a die edge connecting an upper end and an inner circumference of the partition wall is rounded.

5. The forming apparatus according to claim 2,
wherein the punch includes:
a base portion in contact with or adjacent to an inner circumference of the stripper; and
a protruding portion protruded downward from the base portion and configured to apply pressure to the target area of the pouch film while the protruding portion is inserted into the forming space,
wherein an auxiliary space is formed between the inner circumference of the stripper and an outer circumference of the protruding portion, and
wherein the pressure applying unit applies the pneumatic pressure to the peripheral area of the pouch film to stretch it into the auxiliary space.

6. The forming apparatus according to claim 5,
wherein a punch edge connecting a lower surface and the outer circumference of the protruding portion is rounded.

7. The forming apparatus according to claim 5,
wherein the pressure applying unit applies the pneumatic pressure to the peripheral area of the pouch film to stretch it into the auxiliary space.

8. The forming apparatus according to claim 5,
wherein the base portion is adjacent to an upper end of the partition wall when the protruding portion is fully inserted into the forming space.

9. The forming apparatus according to claim 5,
wherein the punch moves from a first height at which the protruding portion is adjacent to an upper end of the partition wall to a second height at which the base portion is adjacent to the upper end of the partition wall.

10. The forming apparatus according to claim 9,
wherein the pressure applying unit applies the pneumatic pressure to the peripheral area of the pouch film during the movement of the punch from the first height to the second height.

11. The forming apparatus according to claim 1,
wherein the die has a passage communicating the pressure applying unit with the additional space.

12. The forming apparatus according to claim 11,
wherein the passage runs from a lower surface or an outer circumferential surface of the die to the additional space.

13. A forming method for forming an accommodation portion in a pouch film, the forming method comprising the steps of:
holding the pouch film between a die and a stripper;
placing a punch such that the punch faces a forming space of the die with the pouch film positioned therebetween;
applying, by a pressure applying unit, pneumatic pressure to the pouch film to stretch a peripheral area of the pouch film into an auxiliary space defined between the stripper and the punch; and
applying, by the punch, pressure to the pouch film while the punch is inserted into the forming space, to stretch a target area of the pouch film into the forming space, the target area located at an inner position than the peripheral area.

14. The forming method according to claim 13,
wherein in the step of applying the pressure to the pouch film, the pressure applying unit maintains the pneumatic pressure applied to the pouch film.

15. The forming method according to claim 13,
wherein in the step of applying the pneumatic pressure to the pouch film, the pressure applying unit applies the pneumatic pressure through an additional space separated from the forming space of the die by a partition wall.

16. The forming method according to claim 15,
wherein in the step of placing the punch, the punch is located at a height close to an upper end of the partition wall.

17. The forming method according to claim 15,
wherein the punch includes:
a base portion in contact with or adjacent to an inner circumference of the stripper; and
a protruding portion protruded downward from the base portion and inserted into the forming space, and
wherein in the step of applying the pressure to the pouch film, the punch moves from a first height at which the protruding portion is adjacent to an upper end of the partition wall to a second height at which the base portion is adjacent to the upper end of the partition wall.
